# EUROPÄISCHE PATENTSCHRIFT

(11) **EP 0 477 481 B1**
(45) Veröffentlichungstag und Bekanntmachung des Hinweises auf die Patenterteilung: **21.09.1994**
(21) Anmeldenummer: 91110619.3
(22) Anmeldetag: 27.06.1991
(51) Int. Cl.: B60H 3/06, B01D 53/04

(54) **Filter im Zulaufstrom einer Heiz- oder Klimaanlage eines Kraftwagens**
Air supply entry filter for a heating or air conditioning installation in a motor vehicle
Filtre dans le courant d'arrivé d'air pour installation de chauffage ou de conditionnement d'air d'un véhicule automobile

(30) Priorität: 24.09.1990 DE 4030145
(43) Veröffentlichungstag der Anmeldung: 01.04.1992
(73) Patentinhaber: MERCEDES-BENZ AG, 70327 Stuttgart (DE)
(72) Erfinder: Arold, Klaus, W-7032 Sindelfingen (DE); Koukal, Heinz, W-7032 Sindelfingen (DE)

(56) Entgegenhaltungen:
- DE-A- 3 626 391
- US-A- 4 702 753
- US-A- 5 004 487
- PATENT ABSTRACTS OF JAPAN vol. 11, no. 281 (M-624)(2728) 11. September 1987 & JP-A-62 080 125 (TOYODA GOSEI) 13. April 1987

## Beschreibung

Die Erfindung betrifft einen Filter im Zuluftstrom einer Heiz- oder Klimaanlage eines Kraftwagens zum Zurückhalten schädlicher gasförmiger Bestandteile der Luft, wobei das Filter die Form eines Rohrabschnittes aufweist, der quer zu seiner Mittellängsachse durchströmt wird und dessen eines Mantelende durch eine Klappe wahlweise geschlossen oder geöffnet werden kann.

Eine derartige Filterausbildung ist durch die DE-A- 36 26 391 bekannt und bietet den Vorteil, daß in schadstoffreier bzw. schadstoffarmer Atmosphäre durch Öffnen der Klappe das Filter außer Betrieb nehmbar ist und gleichzeitig ein erhöhter Luftdurchsatz auftritt. Bei Filterbetrieb ist dessen Aufnahmekapazität nach einer gewissen Zeit erschöpft, so daß dieser ersetzt werden muß. Dieser Zeitraum läßt sich dadurch verlängern, daß das Filter in bestimmten Zeitabständen eine Desorption erfährt, wobei dieser Vorgang durch Aufheizen des Filtermaterials wesentlich abkürzbar ist.

Es ist Aufgabe der Erfindung, einen Weg aufzuzeigen, der einen schnell durchführbaren Desorptionsvorgang gestattet, wobei der hierzu notwendige Aufwand möglichst gering sein soll.

Diese Aufgabe wird bei einem Filter gemäß dem Oberbegriff des Patentanspruches 1 durch dessen kennzeichnende Merkmale gelöst.

Zur Aufheizung der Anker werden diese als Rohr ausgebildet und im Bedarfsfall durch Kühlwasser durchflossen. Jedes Rohr kann aber auch einen Heizeinsatz aufweisen, der an eine elektrische Spannungsquelle anschließbar ist. Das Einschalten der Heizung kann willkürlich oder auch selbsttätig erfolgen, wobei beim Einschalten zweckmäßigerweise ein Zeitschaltglied anläuft, das nach dem Ablauf einer vorbestimmten Zeit den Heizvorgang wieder abschaltet. Während der Desorptionsphase wird die das Filter verlassende Luft vorzugsweise unter Umgehung des Fahrgastraumes des Kraftwagens direkt in die freie Atmosphäre geführt, was in besonders einfacher Weise dadurch erreicht wird, daß in Umkehr der Drehrichtung eines Heizgebläses das Filter in Gegenrichtung zum Filterbetrieb durchströmt wird.

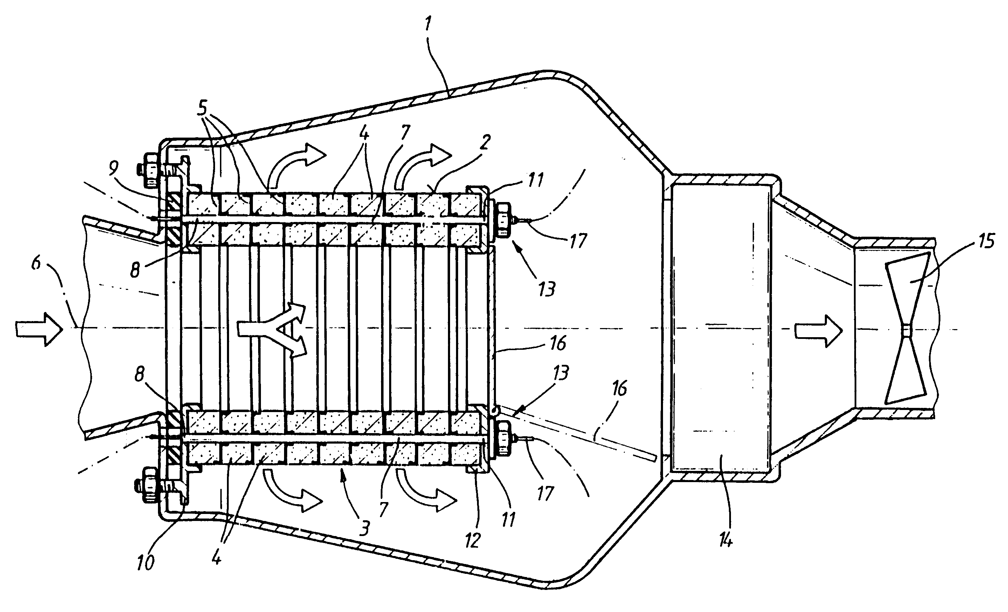

Ein Ausführungsbeispiel der Erfindung wird nachfolgend anhand der Zeichnung näher erläutert.

Im Zuluftkanal 1 einer nicht näher dargestellten Heizungs- oder Klimaanlage eines Kraftwagens ist ein Filter 2 angeordnet, der die Form eines Rohrabschnittes 3 aufweist. Das Filter 2 besteht aus geschichteten, mit Aktivkohle angefüllten Scheiben 4, die durch jeweils eine Zwischenlage 5 aus einem gut wärmeleitenden Material, wie z.B. Aluminium voneinander getrennt sind. Die Scheiben 4 und die Zwischenlagen 5 werden von in Richtung der Mittellängsachse 6 des Filters 2 sich erstreckende Anker 7 durchdrungen, die an einem Ende 8 von einem unter Zwischenschaltung einer Dichtung 9 mit dem Zuluftkanal 1 verbundenen Teller 10 aufgenommen werden. Das andere Ende 11 jedes in ein Außengewinde auslaufenden Ankers 7 durchdringt eine Stützplatte 12 und kann durch eine Schraubverbindung 13 mit dem Filter 2 so verspannt werden, daß nur noch gefilterte, die Scheiben 4 quer zur Mittellängsachse 6 durchströmende Luft in Richtung eines nachgeschalteten Heizwärmetauschers 14 und eines Heizgebläses 15 austritt. Letzteres könnte auch dem Filter 2 vorgeschaltet sein, so daß dann die zu filternde Luft durch das Filter 2 gedrückt wird.

An der Stützplatte 12 ist eine Klappe 16 gelagert, die ausgehend von der in ausgezogenen Linien dargestellten Schließstellung in die in strichpunktierter Linie angedeutete Offenstellung überführt werden kann, wobei die Offenstellung, z.B. ausgelöst durch einen Sensor dann angefahren wird, wenn der Kraftwagen in reiner oder nur schwach verunreinigter Atmosphäre eingesetzt wird.

Im Filterbetrieb strömt die Luft entsprechend den angedeuteten Pfeilen in das Innere des Filters 2 ein, durchdringt dessen Scheiben 4 unter Adsorption schädlicher Bestandteile durch die Aktivkohle quer zur Mittellängsachse 6 und tritt dann gereinigt aus, um danach in Richtung des Heizwärmetauschers 14 abzuströmen.

Jeder Anker 7 ist als Rohr ausgebildet, das in später noch näher erläuterter Weise aufheizbar ist. Die Zwischenlagen 5 stehen mit dem zugeordneten, z.B. aus Aluminium bestehenden Anker 7 in gut wärmeleitender Verbindung, so daß ein schneller Wärmeübergang zu den Zwischenlagen 5 gegeben ist. Diese heizen sich somit auf und geben Wärme an die Scheiben 4 ab, was zu einer Aufheizung derselben und zu einem beschleunigten Ablauf des Desorptionsvorganges führt. Bei dieser Regeneration des Filters 2 ist es zweckmäßig, wenn die den Filter 2 verlassende Luft unter Umgehung des Fahrgastraumes in die freie Atmosphäre geleitet wird, was durch entsprechende Kanalführung im Zusammenspiel mit dem wechselweise Schließen und Öffnen von die Luftführung beeinträchtigenden Klappen möglich ist. In diesem Zusammenhang ergibt sich eine besonders einfache Luftführung, wenn die Drehrichtung des Heizgebläses 15 umgekehrt wird, so daß ein Strömungsverlauf entgegen der eingetragenen Pfeile einsetzt. Die Regenerationsphase des Filters 2 erfolgt zweckmäßigerweise zu Zeiten geringen Frischluftbedarfs oder während Stillstandszeiten des Kraftwagens.

Zur Erwärmung der Anker 7 stehen mehrere Möglichkeiten zur Verfügung. Eine leicht praktikable Lösung besteht darin, unter Zwischenschaltung eines Absperrventiles die Anker 7 an den Motorkühlwasserkreislauf anzuschließen. Eine weitere, gleichfalls leicht verwirklichbare Lösung sieht vor, jeden Anker 7 mit einem elektrischen Heizeinsatz 17 zu versehen und diesen unter Zwischenschaltung eines allen Heizeinsätzen 17 gemeinsamen Schalters mit einer Spannungsquelle zu verbinden, wobei als Spannungsquelle z.B. die Fahrzeugbatterie verwendbar wäre.

## Patentansprüche

1. Filter im Zuluftstrom einer Heiz- oder Klimaanlage eines Kraftwagens zum Zurückhalten schädlicher gasförmiger Bestandteile der Luft, wobei das Filter (2) die Form eines Rohrabschnittes aufweist, der quer zu seiner Mittellängsachse (6) durchströmt wird und dessen eines Mantelende durch eine Klappe (16) wahlweise geschlossen oder geöffnet werden kann,
**dadurch gekennzeichnet,**
daß das Filter (2) aus geschichteten, mit Aktivkohle angefüllten Scheiben (4) besteht, die jeweils durch eine aus gut wärmeleitenden Material bestehende Zwischenlage (5) voneinander getrennt sind, und daß die Scheiben (4) und die Zwischenlagen (5) über diese in Richtung der Mittellängsachse (6) des Rohrabschnittes (3) durchdringende Anker (7) gegeneinander verspannbar und die in wärmeleitender Verbindung zu den Zwischenlagen (5) stehenden Anker (7) aufheizbar sind.

2. Filter nach Anspruch 1,
**dadurch gekennzeichnet,**
daß die Anker (7) als Rohr ausgebildet sind und durch Kühlwasser durchströmbar sind.

3. Filter nach Anspruch 1,
**dadurch gekennzeichnet,**
daß die Anker (7) als Rohr ausgebildet sind und jeweils einen an eine elektrische Spannungsquelle anschließbaren Heizeinsatz (17) aufweisen.

## Claims

1. Filter in the inlet stream of a heating system or air conditioning system of a motor vehicle for retaining noxious gaseous components of the air, the filter (2) being in the form of a tubular section which has air flowing through it transversely to its central longitudinal axis (6) and one casing end of which can be optionally closed or opened by means of a flap (16), characterised in that the filter (2) consists of layered discs (4) filled with activated carbon, which are separated from one another in each case by an intermediate layer (5) consisting of material with good heat-conducting properties, and in that the discs (4) and the intermediate layers (5) can be clamped to each other by means of armatures (7) penetrating the said discs in the direction of the central longitudinal axis (6) of the tubular section (3) and the armatures (7) which have a direct heat-conducting connection to the intermediate layers (5) can be heated.

2. Filter according to Claim 1, characterised in that the armatures (7) are designed as a tube and can have cooling water flowing through them.

3. Filter according to Claim 1, characterised in that the armatures (7) are designed as a tube and each have a heating unit (17) which can be connected to an electrical voltage source.

## Revendications

1. Filtre dans le courant d'arrivée d'air d'un système de chauffage ou de climatisation d'un véhicule automobile pour retenir des constituants gazeux nocifs de l'air, filtre (2) qui affecte la forme d'un tronçon de tube parcouru transversalement à son axe longitudinal central (6) et dont une extrémité de la paroi latérale peut être fermée ou ouverte sélectivement au moyen d'un clapet (16),
caractérisé en ce que le filtre (2) est composé de disques (4) empilés, chargés de charbon actif, qui sont chaque fois séparés l'un de l'autre par une couche intermédiaire (5) en matériau bon conducteur thermique, et que les disques (4) et les couches intermédiaires (5) peuvent être serrés ensemble par des tiges d'assemblage ou tirants (7) qui traversent les disques et les couches intermédiaires dans la direction de l'axe longitudinal central (6) du tronçon de tube (3), tirants qui sont en liaison de conduction thermique avec les couches intermédiaires (5) et peuvent être chauffés.

2. Filtre selon la revendication 1, caractérisé en ce que les tirants (7) sont réalisés comme des tubes et peuvent être traversés d'eau de refroidissement.

3. Filtre selon la revendication 1, caractérisé en ce que les tirants (7) sont réalisés comme des tubes et comportent chacun un élément chauffant (17) qui peut être raccordé à une source de courant électrique.
